# EUROPEAN PATENT APPLICATION

(11) **EP 3 712 554 A1**
(43) Date of publication of application: **23.09.2020**
(21) Application number: 18879378.0
(22) Date of filing: 15.11.2018
(51) Int. Cl.: G01B 11/24, G01B 11/16

(54) **INSPECTION DEVICE**

(30) Priority: 15.11.2017 KR 20170152385
(71) Applicant: Koh Young Technology Inc, Seoul 08588 (KR)
(72) Inventor: HUR, Jung, Bucheon-si Gyeonggi-do 14757 (KR); CHOI, Woo Jae, Yongin-si Gyeonggi-do 16813 (KR)
(74) Representative: M. Zardi & Co S.A.
(86) International application number: PCT/KR2018/013944
(87) International publication number: WO 2019/098686

(57) **Abstract**

An inspection apparatus for inspecting the appearance of an inspection target object is provided. The inspection apparatus according to one embodiment of the present disclosure includes a support part configured to hold an inspection target object such that a side surface of the inspection target object faces a predetermined direction, a light source configured to irradiate light toward the inspection target object, a diffusion reflector configured to diffusely reflect at least a part of the irradiated light to irradiate the reflected light to the side surface of the inspection target object, and at least one inspection part configured to inspect the inspection target object by receiving the light reflected from the inspection target object and the diffusion reflector.

## Description

### TECHNICAL FIELD

The present disclosure relates to an inspection apparatus for inspecting the exterior of an inspection target object.

### BACKGROUND

In general, objects like cases of various electronic products such as cell phones, digital cameras and telephones, have various patterns or symbols formed by imprinting or printing. Furthermore, the objects may be made of various materials such as plastics, metals and ceramics. Defects, including scratches or dents, may be generated on the surfaces of these objects during production and transportation. The reliability of products may decrease when the objects having such defects are used in the manufacture of electronic devices. Accordingly, the objects are required to be subjected to an exterior inspection process for inspecting whether or not defects are generated on the surfaces of the objects. Typically, an exterior inspection can be performed through the naked eye. However, the exterior inspection by the naked eye is inferior in workability, and may fail to find defects by mistake.

In a conventional inspection apparatus, while an object such as a case or the like placed on a conveyor belt is transported in one direction, a plurality of cameras installed outside the conveyor belt may capture images of the object from multiple angles to obtain images of the respective surfaces of the case. By analyzing the images, it is possible to inspect whether a defect is present on the case. However, such an inspection apparatus using the conveyor belt and the cameras is disadvantageous in cost due to the use of a large number of cameras. Furthermore, it is difficult to obtain precise images when the object is not seated at a right position on the conveyor belt. In addition, when the surface of the object is close to a mirror surface, the light irradiated on the case may be completely reflected by the surface of the object (the mirror surface), thereby hindering diffused reflection. Thus, the outer edge of the object is indistinctly displayed (e.g., darkly displayed) in the images of the object. Therefore, it is difficult to detect the outer edge of the object. Consequently, an error may occur when making out whether the object is defective.

### SUMMARY

Various embodiments of the present disclosure provide an inspection apparatus capable of reducing the time and cost of inspection while precisely inspecting the exterior of an inspection target object.

Furthermore, various embodiments of the present disclosure provide an inspection apparatus capable of accurately and quickly inspecting the front, back and side surfaces of an inspection target object.

In addition, various embodiments of the present disclosure provide an inspection apparatus capable of accurately detecting an outer edge (boundary) of one side surface of an inspection target object.

An inspection apparatus according to one embodiment of the present disclosure may include: a support configured to hold an inspection target object such that a side surface of the inspection target object faces a predetermined direction; a light source configured to irradiate light toward the inspection target object; a diffusion reflector configured to diffusely reflect at least part of the light and irradiate the at least part of the light to the side surface of the inspection target object; and at least one inspection part configured to inspect the inspection target object by receiving the at least part of the light reflected from the diffusion reflector and light reflected from the inspection target object.

According to one embodiment, the diffusion reflector is provided below the support.

According to one embodiment, the diffusion reflector is made of a material having a preset diffusion reflectance.

According to one embodiment, the diffusion reflector has a size or a shape that enables the diffusion reflector to diffusely reflect the at least part of the light irradiated from the light source and irradiate the at least part of the light to the side surface of the inspection target object inclined at a predetermined angle by the support.

According to one embodiment, the diffusion reflector has at least one shape selected from the group of a flat shape, a curved surface shape and a bent shape.

According to one embodiment, the support includes a flipper configured to rotate the inspection target object.

According to one embodiment, the light irradiated from the light source includes pattern light.

According to some embodiments of the present disclosure, at least part of the light irradiated from the light source can be diffusely reflected by the diffusion reflector and can be irradiated to the inspection target object. Thus, the outer edge (boundary) of one side surface of the inspection target object can be clearly displayed in the image of the inspection target object, whereby the outer edge of the inspection target object can be easily detected.

### BRIEF DESCRIPTION OF DRAWINGS

FIG. 1 is a perspective view schematically illustrating an inspection apparatus according to an embodiment of the present disclosure.
FIG. 2 is a perspective view schematically illustrating a flipper as a support according to an embodiment of the present disclosure.
FIG. 3A is a sectional view of a diffusion reflector according to an embodiment of the present disclosure.
FIG. 3B is a sectional view of a diffusion reflector according to another embodiment of the present disclosure.
FIG. 3C is a sectional view of a diffusion reflector according to another embodiment of the present disclosure.
FIG. 4 is a view for explaining the operation of an inspection part according to an embodiment of the present disclosure.
FIG. 5 is a view illustrating an example in which the light is reflected to an inspection target object by using the diffusion reflector according to an embodiment of the present disclosure.
FIG. 6 is a perspective view schematically illustrating an inspection apparatus according to an application example of the present disclosure.
FIG. 7 is a plan view schematically illustrating the inspection apparatus illustrated in FIG. 6.
FIG. 8 is a perspective view illustrating a flipper according to an application example of the present disclosure.
FIGS. 9A to 9E are views for explaining an exemplary operating method of the flipper according to an application example of the present disclosure.
FIG. 10 is a view for explaining an exemplary operating method of the flipper according to an application example of the present disclosure.

### DETAILED DESCRIPTION

Embodiments of the present disclosure are illustrated for describing the contents of the present disclosure. The scope of the claims according to the present disclosure is not limited to the embodiments described below or to the detailed descriptions of these embodiments.

All technical or scientific terms used herein have meanings that are generally understood by a person having ordinary knowledge in the art to which the present disclosure pertains, unless otherwise specified. The terms used herein are selected only for more clear illustration of the present disclosure, and are not intended to limit the scope of claims in accordance with the present disclosure.

The expressions "include", "provided with", "have" and the like used herein should be understood as open-ended terms connoting the possibility of inclusion of other embodiments, unless otherwise mentioned in a phrase or sentence including the expressions.

A singular expression can include meanings of plurality, unless otherwise mentioned, and the same applies to a singular expression stated in the claims.

The terms "first", "second", etc. used herein are used to identify a plurality of components from one another, and are not intended to limit the order or importance of the relevant components.

The term "unit" used in these embodiments means a software component or hardware component, such as a field-programmable gate array (FPGA) and an application specific integrated circuit (ASIC). However, a "unit" is not limited to software and hardware, it may be configured to be an addressable storage medium or may be configured to run on one or more processors. For example, a "unit" may include components, such as software components, object-oriented software components, class components, and task components, as well as processors, functions, attributes, procedures, subroutines, segments of program codes, drivers, firmware, micro-codes, circuits, data, databases, data structures, tables, arrays, and variables. Functions provided in components and "unit" may be combined into a smaller number of components and "units" or further subdivided into additional components and "units."

The expression "based on" used herein is used to describe one or more factors that influences a decision, an action of judgment or an operation described in a phrase or sentence including the relevant expression, and this expression does not exclude additional factors influencing the decision, the action of judgment or the operation.

When a certain component is described as "coupled to" or "connected to" another component, this should be understood as having the meaning that the certain component may be coupled or connected directly to the other component or that the certain component may be coupled or connected to the other component via a new intervening component.

Direction indications such as "upward", "upper" and the like used in the present disclosure are based on the direction in which an inspection part is positioned with respect to an inspection target object in the accompanying drawings, and direction indications such as "downward", "lower" and the like refer to the opposite direction. The inspection target object illustrated in the accompanying drawings may be oriented differently, and the direction indications may be interpreted accordingly.

Hereinafter, embodiments of the present disclosure will be described with reference to the accompanying drawings. In the accompanying drawings, identical or corresponding components are indicated by identical reference numerals. In the following description of embodiments, repeated descriptions of the identical or corresponding components will be omitted. However, even if a description of a component is omitted, such a component is not intended to be excluded in an embodiment.

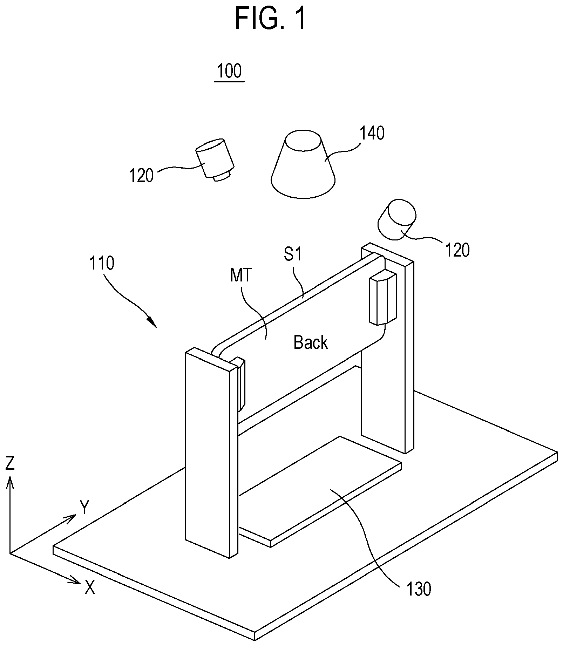

FIG. 1 is a perspective view schematically illustrating an inspection apparatus 100 according to an embodiment of the present disclosure. Referring to FIG. 1, the inspection apparatus 100 includes a support 110, a light source 120, a diffusion reflector 130 and an inspection part 140.

The support 110 holds an inspection target object MT such that the side surface of the inspection target object MT faces a predetermined direction. According to an embodiment, the inspection target object MT may be a product that requires exterior inspection. The inspection target object MT may be a metal product having an exterior made of a metal. The shape of the inspection target object MT may be a cuboid shape or a similar shape. For example, the inspection target object MT may have opposite front and back surfaces, side surfaces, and curved edge portions. However, the material of the inspection target object MT is not limited to a metal, and the shape of the inspection target object MT is not limited to a cuboid shape or a similar shape.

In addition, the side surfaces of the inspection target object MT may include two long side surfaces opposite to each other and two short side surfaces opposite to each other. As used herein, the term "long side surface" may mean the side surface adjacent to the long side of the front surface or the back surface, and the term "short side surface" may mean the side surface adjacent to the short side of the front surface or the back surface. The inspection apparatus 100 according to the present embodiment is configured to inspect at least one of the front surface, the back surface, the side surfaces and the edge portions of the inspection target object MT.

In one embodiment, as illustrated in FIG. 1, the support 110 may hold the short side surfaces of the inspection target object MT such that any one long side surface (S1) of the long side surfaces of the inspection target object MT can face upward (i.e., the inspection part 140). In another embodiment, the support 110 may hold the long side surfaces of the inspection target object MT such that any one short side surface of the short side surfaces of the inspection target object MT can face upward (i.e., the inspection part 140).

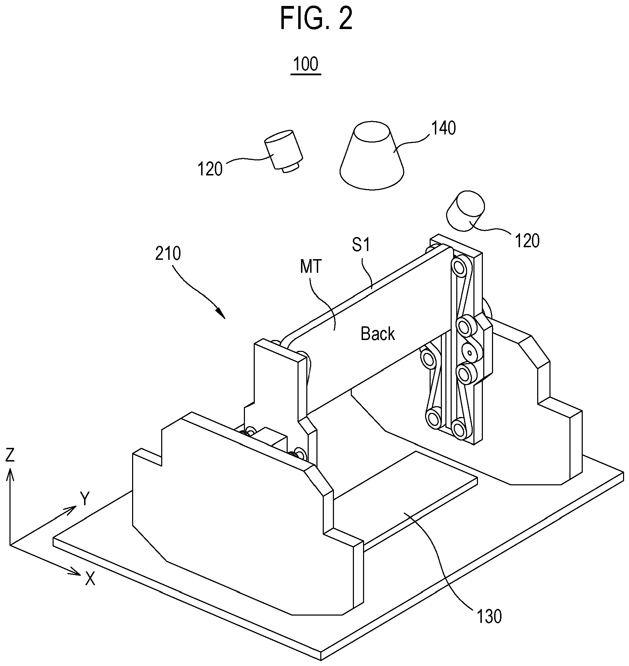

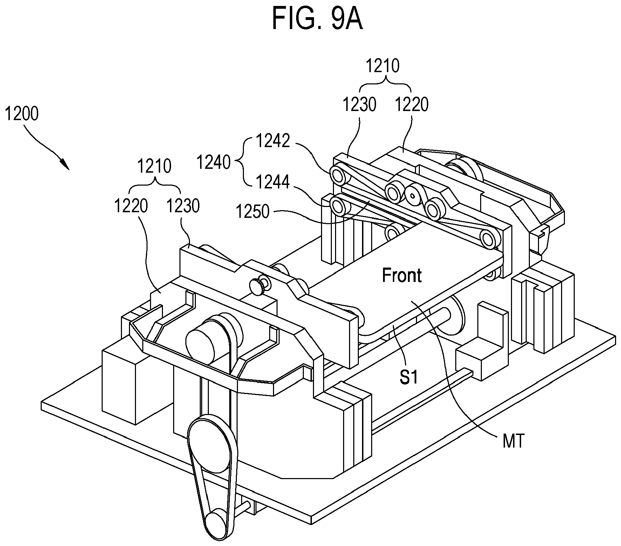

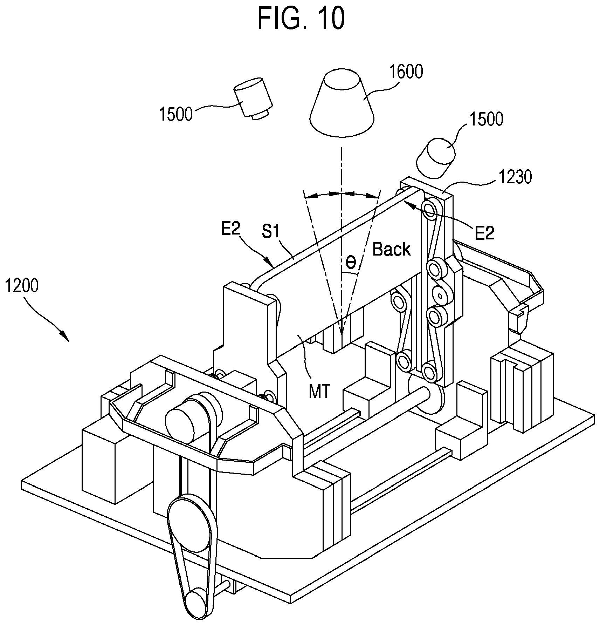

FIG. 2 is a perspective view schematically illustrating a flipper 210 as the support according to an embodiment of the present disclosure. In one embodiment, the flipper 210 that rotates the inspection target object MT so that the side surface of the inspection target object MT faces a predetermined direction may be used as the support. Hereinafter, the state in which the side surface of the inspection target object MT faces upward is referred to as a 'vertical state'. For example, when the inspection target object MT is in a horizontal state in which the front surface or the back surface faces upward, the flipper 210 may vertically rotate the inspection target object MT by about 90 degrees to establish a vertical state in which any one long side surface (S1) of the long side surfaces of the inspection target object MT faces upward. In addition, the flipper 210 may rotate the inspection target object MT by about 180 degrees when the inspection target object MT is in the vertical state, thereby establishing the vertical state again so that the position of the lower side surface and the position of the upper side surface are interchanged. The detailed operating method of the flipper 210 will be described in more detail with respect to FIGS. 9A to 9E and 10.

The light source 120 may be configured to form light and irradiate the light to an inspection target object. In one embodiment, the light source 120 may be formed of a light source that forms pattern light. In another embodiment, the light source 120 may be configured as a plurality of LED light sources located at positions spaced apart from the inspection target object MT. For example, the light source 120 may include a plurality of LED light sources arranged in a circular shape, and may include a white light source, a red light source, a green light source, a blue light source, an ultraviolet light source, an infrared light source and the like.

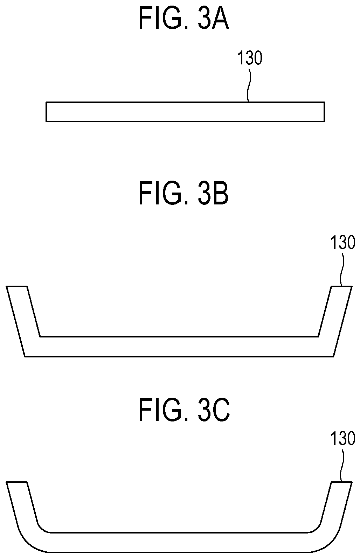

The diffusion reflector 130 may be configured to diffusely reflect at least part of the light irradiated from the light source 120 to irradiate the reflected part of the light to the side surface of the inspection target object MT. For example, the diffusion reflector 130 may have such a size or a shape that enables the diffusion reflector 130 to irradiate the at least part of the light to one side surface of the inspection target object inclined at a predetermined angle by the flipper 110. In one embodiment, the diffusion reflector 130 may have at least one shape selected from the group of a flat shape, a curved surface shape and a bent shape. As an example, the diffusion reflector 130 may have a flat plate shape as illustrated in FIG. 3A. As another example, the diffusion reflector 130 may have a bent shape as illustrated in FIG. 3B. As another example, the diffusion reflector 130 may have a curved surface shape as illustrated in FIG. 3C.

In addition, the diffusion reflector 130 may be made of a material capable of diffusely reflecting at least part of the light irradiated from the light source 120. In one embodiment, the diffusion reflector 130 may be made of a material having a preset diffusion reflectance (e.g., paper, metal, plastic, etc.). For example, the preset diffusion reflectance may be 60% or more, but is not limited thereto. In another embodiment, the diffusion reflector 130 may be formed by coating a material having a preset diffusion reflectance on a surface of paper, metal, plastic or the like.

In one embodiment, the diffusion reflector 130 may be provided under the support 110.

The inspection part 140 may capture images of the exterior of the inspection target object MT (i.e., may acquire image data for the inspection target object MT). According to an embodiment, the inspection part 140 may receive the light reflected from the inspection target object MT and the light reflected from the diffusion reflector 130 to capture images of the inspection target object MT. The inspection part 140 may include a sensor or a detector of all types that receives the light reflected from the inspection target object MT to detect a defect in the inspection target object MT, a boundary of the side surface of the inspection target object MT, and the like. For example, the inspection part 140 may include a CCD camera. As another example, the inspection part 140 may be a high-performance CMOS camera such as a sCMOS (Scientific CMOS) camera or the like. In one embodiment, the inspection part 140 may include devices that measure the shape of the inspection target object MT by irradiating light to the inspection target object MT from the light source 120 and receiving the light reflected from the inspection target object MT.

The inspection part 140 may include devices that measure the three-dimensional shape of the inspection target object MT by irradiating pattern light to the inspection target object MT while changing the phase of the pattern light, and receiving the pattern light reflected from the inspection target object MT. In this regard, the inspection part 140 may adopt any suitable technique or principle for measuring a three-dimensional shape using pattern light.

The inspection part 140 is disposed above the support 110 and may inspect the inspection target object MT while cycling through predetermined positions. In one embodiment, the inspection part 140 may inspect the side surfaces of the inspection target object MT at an inspection position provided above the flipper 110. The inspection part 140 may be installed in a gantry (not shown), and may be moved in an X direction and/or a Y direction, and further in a Z direction.

Meanwhile, in the inspection apparatus 100 according to the present embodiment, the inspection part 140 is not limited to the camera, and may include a camera and an analysis device capable of analyzing the images acquired through the camera. The analysis device is an analysis computer on which an analysis program is installed, and may be, for example, a general personal computer (PC), a workstation, a super computer, or the like.

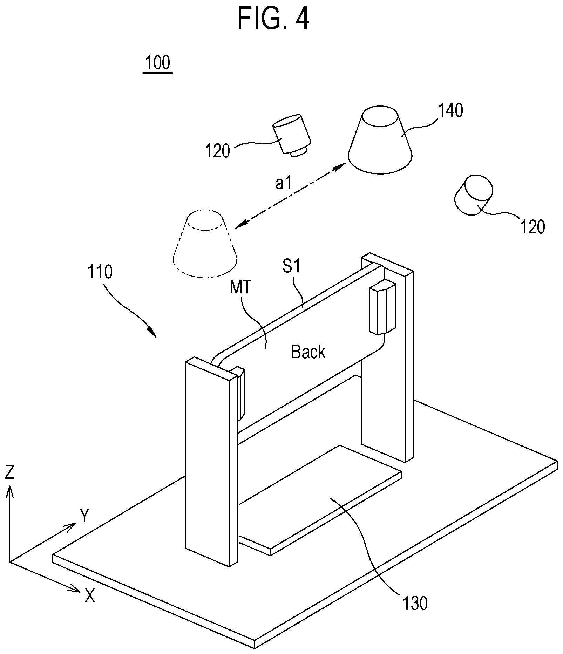

FIG. 4 is a view for explaining the operation of the inspection part according to an embodiment of the present disclosure. As illustrated in FIG. 4, the inspection part 140 may inspect the exterior of the inspection target object MT while moving in one direction (a1). In this operation, the inspection part 140 may capture a plurality of images of the long side surface S1 while moving in one direction (a1).

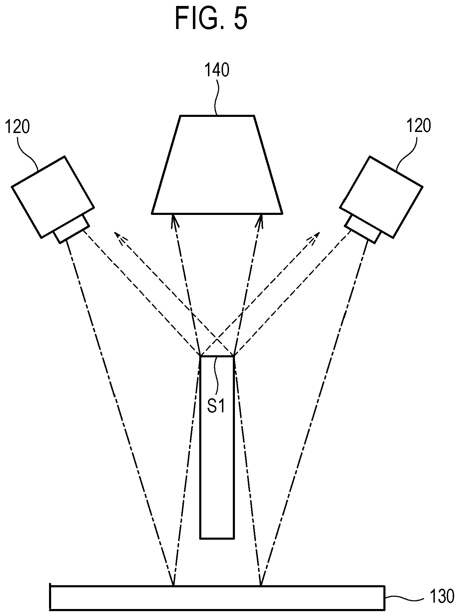

FIG. 5 is a view illustrating an example in which the light is reflected toward the inspection target object by using the diffusion reflector according to an embodiment of the present disclosure. As illustrated in FIG. 5, at least part of the light (indicated by a dotted line) irradiated from the light source 120 is reflected at the outer edge (boundary) of one side surface (e.g., the long side surface S1) of the inspection target object MT. The light reflected at the outer edge (boundary) of one side surface (e.g., the long side surface S1) of the inspection target object MT may not be incident on the inspection part 140. In contrast, at least part of the light (indicated by an alternated long and short dash line) irradiated from the light source 120 is diffusely reflected by the diffusion reflector 130, and is irradiated to the outer edge of one side surface (e.g., the long side surface S1) of the inspection target object MT. The irradiated light is reflected back from the outer edge of one side surface (e.g., the long side surface S1) of the inspection target object MT, and is incident on the inspection part 140. Under such a configuration, the inspection part 140 may detect the outer edge of one side surface (e.g., the long side surface S1) of the inspection target object MT based on the received light.

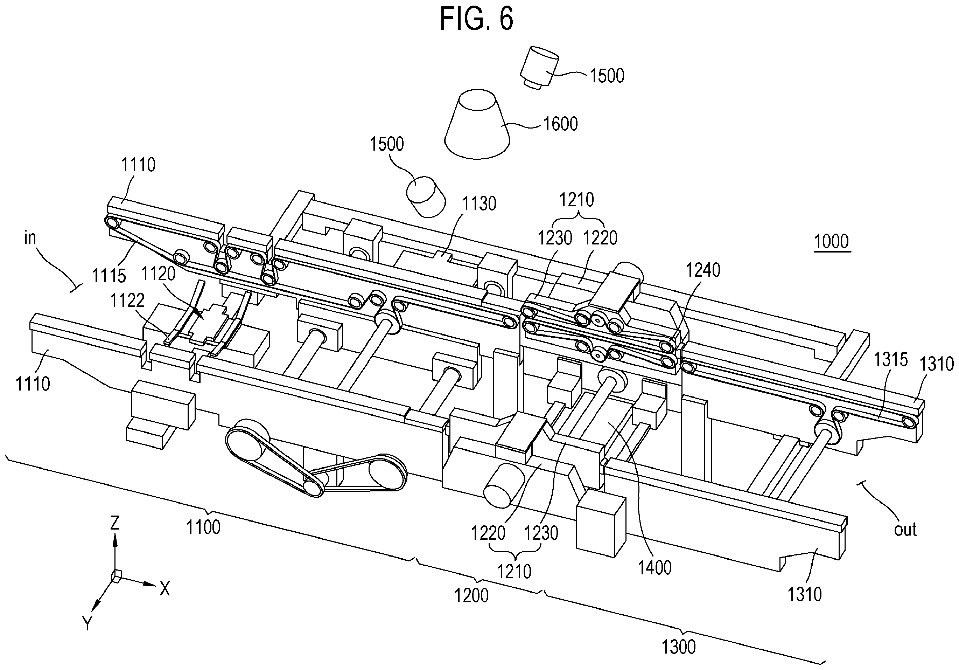

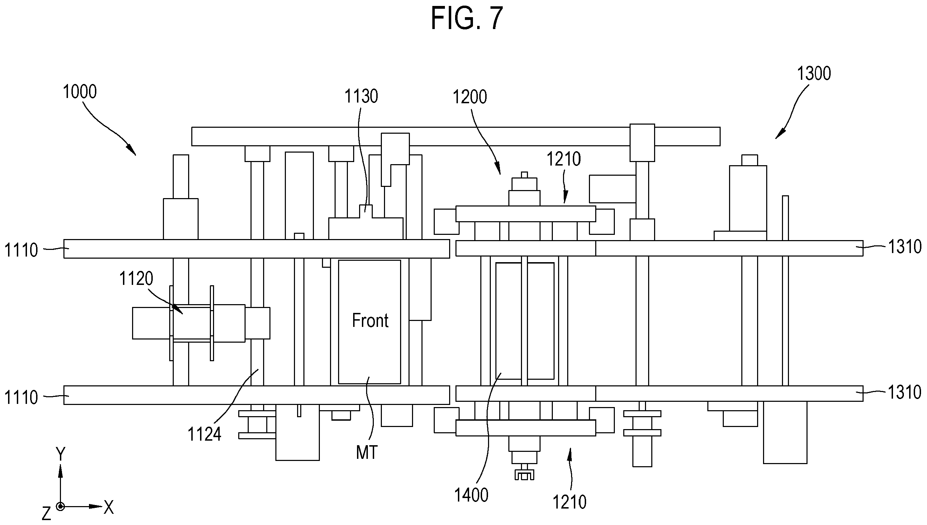

Hereinafter, an application example of the inspection apparatus 100 according to an embodiment of the present disclosure will be explained. FIG. 6 is a perspective view schematically illustrating an inspection apparatus 1000 according to an application example of the present disclosure. FIG. 7 is a plan view schematically illustrating the inspection apparatus 1000 illustrated in FIG. 6.

As illustrated in FIGS. 6 and 7, the inspection apparatus 1000 is configured to include a first conveyor 1100, a flipper 1200, a second conveyor 1300, and a diffusion reflector 1400. In addition, the inspection apparatus 1000 may further include a light source 1500 and an inspection part 1600. In one embodiment, the light source 1500 and the inspection part 1600 may be disposed at predetermined positions (e.g., on the upper side) with respect to the first conveyor 1100, the flipper 1200 and the second conveyor 1300. Alternatively, the light source 1500 and the inspection part 1600 may be disposed in an apparatus separately provided from the inspection apparatus 1000.

The inspection apparatus 1000 may be configured to inspect the inspection target object MT by irradiating light to the inspection target object MT located at the first conveyor 1100 and the flipper 1200, and receiving the light reflected from the inspection target object MT.

The inspection apparatus 1000 according to the present embodiment is configured to inspect at least one of the front surface, the back surface, the side surface and the edge portions of the inspection target object MT.

The first conveyor 1100 may be disposed on an inlet side into which the inspection target object MT is loaded. The first conveyor 1100 may be a part for performing an inspection on the front or back surface of the inspection target object MT in the inspection apparatus 1000. The first conveyor 1100 may transport the inspection target object MT while supporting the inspection target object MT such that the front or back surface of the inspection target object MT faces a predetermined direction. For example, the predetermined direction may be an upper side on which the inspection part 1600 is disposed. As illustrated in FIG. 6, the first conveyor 1100 may include a pair of first rail bodies 1110, a rotating part 1120 and a clamp 1130.

The first rail bodies 1110 may be disposed to face each other and may extend in parallel. Each of the first rail bodies 1110 may be provided with a first conveyor belt 1115. The first conveyor belt 1115 may be movably installed on each of the first rail bodies 1110. The first conveyor 1100 may transport the inspection target object MT through the first conveyor belt 1115 while supporting the inspection target object MT such that the front or back surface of the inspection target object MT faces a predetermined direction (e.g., an upper side on which the inspection part 1600 is disposed). For example, the first conveyor 1100 may drive the first conveyor belt 1115 to transport the loaded inspection target object MT to a front/back surface inspection position provided on the first conveyor 1100, or may transport the inspection target object MT, which has been subjected to the side surface inspection in the flipper 1200 and then transported back to the first conveyor 1100, to the rotating part 1120.

The distance between the first rail bodies 1110 may be adjusted according to the arrangement state of the inspection target object MT placed on the first conveyor belt 1115. For example, the distance between the first rail bodies 1110 when the long side surface of the inspection target object MT faces the width direction (e.g., the Y-axis positive direction) may be larger than the distance between the first rail bodies 1110 when the short side surface of the inspection target object MT faces the width direction.

The rotating part 1120 may be disposed on the transport path of the first conveyor 1100, and may horizontally rotate the inspection target object MT while maintaining the direction of the front or back surface of the inspection target object MT in a posture in which the front or back surface of the inspection target object MT faces upward. For example, the rotating part 1120 may horizontally rotate, by about 90 degrees, the inspection target object MT disposed in the longitudinal direction between the first rail bodies 1110, so that the inspection target object MT can be arranged in the width direction between the first rail bodies 1110. Similarly, the rotating part 1120 may rotate the inspection target object MT from the width direction to the longitudinal direction. As used herein, the term "horizontal" refers to a plane parallel to the front or back surface of the inspection target object MT. Hereinafter, the state in which the front or back surface of the inspection target object MT faces upward is referred to as a 'horizontal state'. In addition, the longitudinal direction may be a direction in which the long side surface of the inspection target object MT is parallel to the first rail bodies 1110, and the width direction may be a direction in which the short side surface of the inspection target object MT is parallel to the first rail bodies 1110. In one embodiment, the rotating part 1120 may include a gripping finger 1122 for gripping the inspection target object MT.

The clamp 1130 is disposed on the transport path of the first conveyor 1100, and may fix the inspection target object MT while the front or back surface of the inspection target object MT is inspected by the inspection part 1600 at the front/back surface inspection position provided on the first conveyor 1100. For example, when the inspection target object MT is moved to the front/back surface inspection position through the first conveyor belt 1115, the clamp 1130 compresses the side surfaces of the inspection target object MT to firmly fix the inspection target object MT, thereby ensuring that the inspection by the inspection part 1600 can be performed stably and accurately.

The flipper 1200 receives the inspection target object MT from the first conveyor 1100 and rotates the inspection target object MT such that the side surface of the inspection target object MT faces a predetermined direction. In one embodiment, the flipper 1200 may be arranged side by side with the first conveyor 1100 along the transport direction of the first conveyor 1100 (e.g., the X direction). The flipper 1200 may be a part for performing an inspection on the side surface of the inspection target object MT in the inspection apparatus 1000.

In one embodiment, the flipper 1200 may rotate the inspection target object MT such that the side surface of the inspection target object MT faces upward (i.e., the inspection part 1600). As used herein, the term "rotation" may mean the rotation about an axis of rotation which is an imaginary straight line connecting the centers of two rotary bodies 1230 described later. For example, when the inspection target object MT is in a horizontal state in which the front or back surface of the inspection target object MT faces upward, the flipper 1200 may rotate the inspection target object MT by about 90 degrees to establish a vertical state in which one side surface of the inspection target object MT faces upward. In addition, when the inspection target object MT is in the vertical state, the flipper 1200 may rotate the inspection target object MT by about 180 degrees to establish the vertical state again such that the position of the lower side surface and the position of the upper side surface are interchanged.

The second conveyor 1300 may be disposed on an outlet side where the inspection target object MT is unloaded. The second conveyor 1300 is disposed side by side with the flipper 1200. The second conveyor 1300 may receive the inspected inspection target object MT from the flipper 1200 and may transfer the inspected inspection target object MT to an outlet. The second conveyor 1300 includes a pair of second rail bodies 1310 disposed to face each other and extending side by side, and a second conveyor belt 1315 movably installed on the second rail bodies 1310. The second conveyor 1300 may transport the inspection target object MT through the second conveyor belt 1315 while supporting the inspection target object MT such that the front or rear surface of the inspection target object MT faces upward.

The diffusion reflector 1400 may be configured to diffusely reflect at least part of the light irradiated from the light source 1500 to irradiate the reflected part of the light to the side surface of the inspection target object MT. Since the diffusion reflector 1400 of this application example has the same configuration and function as the diffusion reflector 130 illustrated in FIGS. 1 to 5, the detailed description thereof is omitted here. In one embodiment, the diffusion reflector 1400 may be provided under the flipper 1200.

The light source 1500 may be configured to form light and irradiate the light to the inspection target object MT. In one embodiment, the light source 1500 may be formed of a light source that forms pattern light. In another embodiment, the light source 1500 may be configured as a plurality of LED light sources located at positions spaced apart from the inspection target object MT. For example, the light source 1500 may include a plurality of LED light sources arranged in a circular shape, and may include a white light source, a red light source, a green light source, a blue light source, an ultraviolet light source, an infrared light source and the like. The inspection part 1600 may capture images of the exterior of the inspection target object MT (i.e., may acquire image data for the inspection target object MT). According to an embodiment, the inspection part 1600 may receive the light reflected from the inspection target object MT to capture images of the inspection target object MT. The inspection part 1600 may include a sensor or a detector of all types that receive the light reflected from the inspection target object MT to detect a defect in the inspection target object MT, a boundary of the side surface of the inspection target object MT, and the like. For example, the inspection part 1600 may include a CCD camera. As another example, the inspection part 1600 may be a high-performance CMOS camera such as a sCMOS (Scientific CMOS) camera or the like.

In one embodiment, the inspection part 1600 may include devices that measure the shape of the inspection target object MT by irradiating light to the inspection target object MT from the light source 1500 and receiving the light reflected from the inspection target object MT.

The inspection part 1600 may include devices that measure the three-dimensional shape of the inspection target object MT by irradiating pattern light to the inspection target object MT while changing the phase of the pattern light, and receiving the pattern light reflected from the inspection target object MT. The inspection part 1600 may adopt any suitable technique or principle for measuring a three-dimensional shape using pattern light.

The inspection part 1600 is disposed above the first conveyor 1100 and the flipper 1200, and may inspect the inspection target object MT while cycling through predetermined positions. For example, the inspection part 1600 may inspect the front and back surfaces of the inspection target object MT at a first inspection position provided above the first conveyor 1100 and may inspect the side surfaces of the inspection target object MT at a second position provided above the flipper 1200. The inspection part 1600 may be installed in a gantry (not shown), and may be moved in an X direction and/or a Y direction, and further in a Z direction.

Meanwhile, in the inspection apparatus 1000 according to the present embodiment, the inspection part 1600 is not limited to the camera, and may include a camera and an analysis device capable of analyzing the images acquired through the camera. The analysis device is an analysis computer on which an analysis program is installed, and may be, for example, a general personal computer (PC), a workstation, a super computer, or the like.

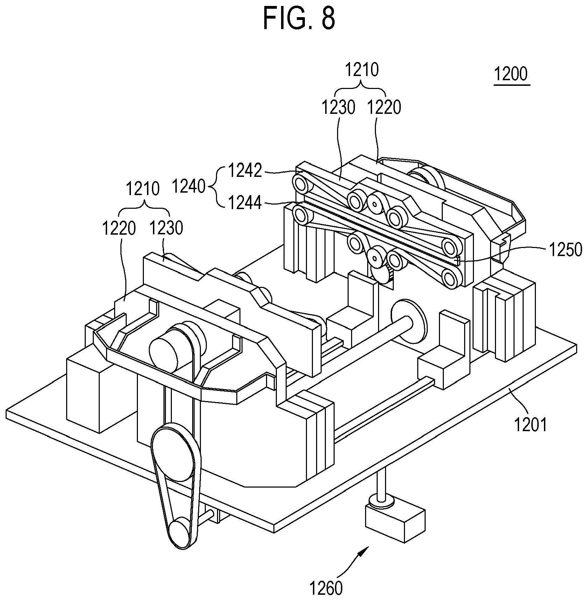

FIG. 8 is a perspective view illustrating the flipper 1200 according to an application example of the present disclosure. As illustrated in FIG. 8, the flipper 1200 includes a pair of flipper bodies 1210, flipper belts 1240 movably installed on the flipper bodies 1210, a flipper clamp 1250, and a flipper lifter 1260.

The flipper bodies 1210 may be disposed on a base plate 1201 to face each other. Furthermore, the distance between the flipper bodies 1210 may be adjusted. In one embodiment, each of the flipper bodies 1210 may include a support body 1220 and a rotary body 1230 provided on the support body 1220 so as to be rotatable by a predetermined angle in a clockwise or counterclockwise direction.

The flipper belts 1240 may be installed on the rotary bodies 1230, respectively, and may extend along the longitudinal direction of the rotary bodies 1230. While the rotary bodies 1230 are positioned in a horizontal state, the flipper belts 1240 may be disposed adjacent to the first conveyor belt 1115 and the second conveyor belt 1315. The flipper 1200 may drive the flipper belts 1240 to transport the inspection target object MT in a direction parallel to the transport direction of the first conveyor 1100. That is, by driving the flipper belts 1240, the inspection target object MT may be moved forward or backward with the front or back surface of the inspection target object MT facing upward.

In one embodiment, each of the flipper belts 1240 may include an upper belt 1242 and a lower belt 1244 arranged on each of the rotary bodies 1230 in a spaced-apart relationship with each other. The inspection target object MT may be transported by driving at least one of the upper belt 1242 and the lower belt 1244.

The flipper clamp 1250 may fix the inspection target object MT. In one embodiment, the flipper clamp 1250 may be installed on each of the rotary bodies 1230. When the inspection target object MT is moved to a proper position by the flipper belts 1240, the flipper clamp 1250 may be brought into close contact with the inspection target object MT to fix the inspection target object MT. As used herein, the term "proper position" may refer to a position where the side surfaces of the inspection target object MT to be inspected are aligned with both ends of each of the rotary bodies 1230, or a position where the side surfaces of the inspection target object MT to be inspected protrude slightly from both ends of each of the rotary bodies 1230.

The flipper lifter 1260 may lift the flipper bodies 1210 in a vertical direction so that one side surface of the inspection target object MT kept in the vertical state is positioned at an appropriate height at which it can be inspected by the inspection part 1600.

FIGS. 9A to 9E are views illustrating an exemplary operating method of the flipper 1200 according to an application example of the present disclosure. FIG. 10 is a view for explaining an exemplary operating method of the flipper 1200 according to an application example of the present disclosure.

First, as illustrated in FIG. 9A, when the inspection target object MT for which the inspection of the front surface has been completed is transported from the first conveyor 1100 to the flipper 1200, the flipper 1200 may drive the flipper belts 1240 to transport the inspection target object MT to a proper position. In this operation, the inspection target object MT may be transported in a state in which the front surface of the inspection target object MT faces upward and the first long side surface S1, which is one of the long side surfaces of the inspection target object MT, faces forward (e.g., the second conveyor 1300). As used herein, the term "proper position" may correspond to a position where the side surface portion of the inspection target object MT to be inspected, for example, the first long side surface S1 of the inspection target object MT, protrudes slightly from one end of each of the rotary bodies 1230. Thereafter, at the proper position, the inspection target object MT may be securely fixed by the flipper clamp 1250.

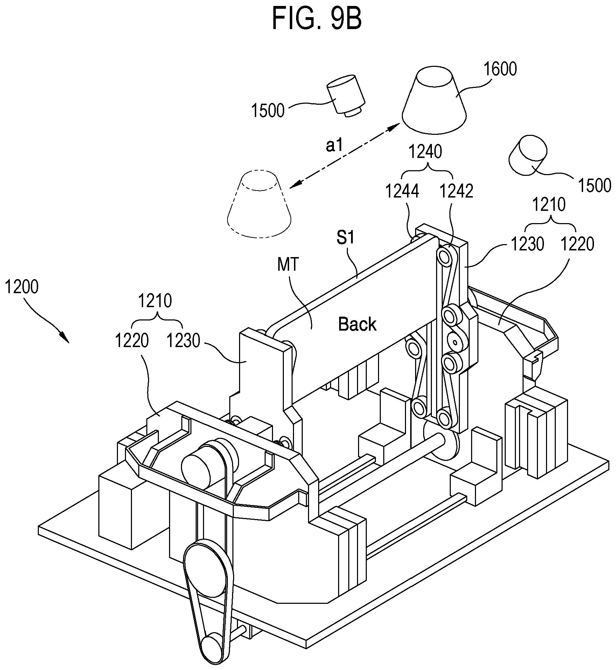

Next, as illustrated in FIG. 9B, the flipper 1200 may rotate the rotary bodies 1230 counterclockwise by about 90 degrees such that one side surface of the inspection target object MT faces a predetermined direction (i.e., so that the inspection target object MT is in the vertical state). The flipper 1200 may lower the inspection target object MT by a certain distance. The reason for lowering the inspection target object MT is to keep the first long side surface S1 of the inspection target object MT spaced apart from the inspection part 1600 such that the distance between the inspection part 1600 and the first long side surface S1 of the inspection target object MT becomes a distance suitable for the inspection of the side surface of the inspection target object MT. According to one embodiment, the lowering of the rotary bodies 1230 may be performed before rotating the rotary bodies 1230. According to another embodiment, the lowering of the rotary bodies 1230 may be performed while rotating the rotary bodies 1230. According to another embodiment, the lowering of the rotary bodies 1230 may be performed after rotating the rotary bodies 1230. That is, when the first long side surface S1 of the inspection target object MT faces upward due to the lowering and rotating operation of the flipper 1200, the inspection part 1600 may inspect the first long side surface S1 of the inspection target object MT.

As illustrated in FIG. 9B, the inspection part 1600 may inspect the exterior of the inspection target object MT while moving in one direction (a1). In this operation, the inspection part 1600 may capture a plurality of images of the first long side surface S1 while moving in one direction (a1).

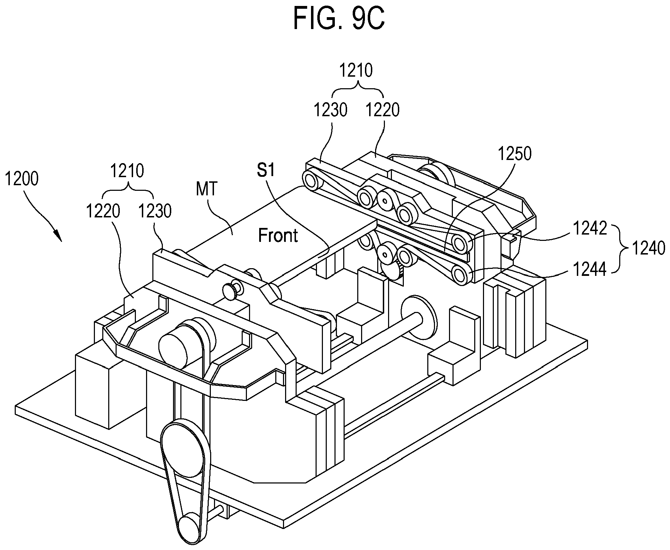

Next, as illustrated in FIG. 9C, the flipper 1200 rotates the rotary bodies 1230 clockwise by about 90 degrees such that the inspection target object MT comes into a horizontal state. The flipper 1200 may raise the inspection target object MT by a predetermined distance. Thereafter, the flipper 1200 drives the flipper belts 1240 to transport the inspection target object MT toward the opposite end of each of the rotary bodies 1230. As a result, the second long side surface S2 of the inspection target object MT opposite to the first long side surface S1 may face backward (e.g., the first conveyor 1100), and the second long side surface S2 of the inspection target object MT may be positioned to protrude slightly from the opposite end of each of the rotary bodies 1230. Thereafter, the inspection target object MT is securely fixed by the flipper clamp 1250.

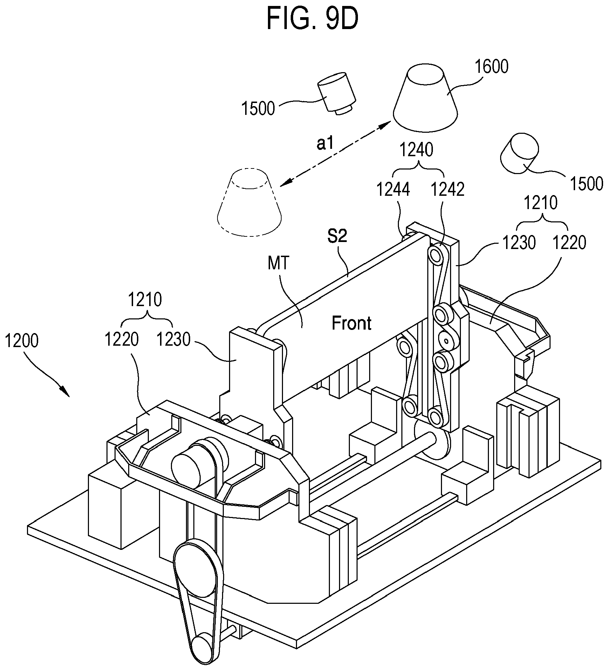

Next, as illustrated in FIG. 9D, the flipper 1200 may rotate the rotary bodies 1230 clockwise by about 90 degrees such that the inspection target object MT comes into a vertical state, and may lower the inspection target object MT to a position suitable for the inspection of the second long side surface S2 of the inspection target object MT by the inspection part 1600. Alternatively, the rotary bodies 1230 may be rotated counterclockwise by about 270 degrees so as to come into a vertical state. When the second long side surface S2 of the inspection target object MT faces upward due to the lowering and rotating operation of the flipper 1200, the inspection part 1600 may inspect the second long side surface S2 of the inspection target object MT.

According to an embodiment, as illustrated in FIG. 9D, the inspection part 1600 may inspect the exterior of the inspection target object MT while moving in one direction (a1). For example, the inspection part 1600 may capture a plurality of images of the second long side surface S2 of the inspection target object MT while moving in one direction (a1).

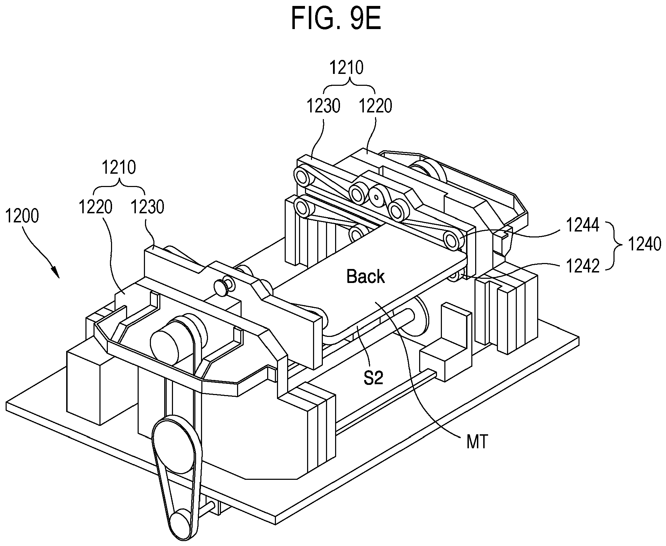

Next, as illustrated in FIG. 9E, the flipper 1200 may rotate the rotary bodies 1230 clockwise about 90 degrees such that the inspection target object MT comes into a horizontal state. The flipper 1200 may raise the inspection target object MT by a certain distance. By the rotation of the rotary bodies 1230, the back surface of the inspection target object MT faces upward, and the second long side surface S2 of the inspection target object MT faces forward (e.g., the second conveyor 1300 in FIG. 6). According to one embodiment, if the inspection of the back surface and the short side surfaces of the inspection target object MT has already been completed, the flipper 1200 may transport the inspection target object MT to the second conveyor 1300. According to another embodiment, the flipper 1200 may transport the inspection target object MT to the first conveyor (1100 in FIG. 6) in order to perform the inspection on the back surface of the inspection target object MT.

FIG. 10 is a view for explaining an exemplary operating method of the flipper 1200 according to an application example of the present disclosure. Hereinafter, an exemplary operating method of the flipper 1200 for inspecting the edge portion of the inspection target object MT will be explained.

As illustrated in FIG. 10, the flipper 1200 may rotate the inspection target object MT so as to come into a vertical state in which one side surface of the inspection target object MT faces upward, and then may rotate the inspection target object MT clockwise and counterclockwise within a predetermined angle θ in a posture in which one side surface of the inspection target object MT faces upward. As a result, the edge portion E2 of one side surface of the inspection target object MT faces the inspection part 1600, and the inspection part 1600 may inspect the edge portion E2 whose image is not captured when the inspection target object MT is in the vertical state. For example, as illustrated in FIG. 10, when the first long side surface S1 of the inspection target object MT faces upward, the inspection target object MT may be further rotated clockwise and counterclockwise by a predetermined angle θ by the rotation of the rotary bodies 1230. Under this configuration, the inspection part 1600 may inspect the edge portion E2 between the first long side surface S1 and the front surface and the edge portion E2 between the first long side surface S1 and the back surface.

After inspecting the long side surfaces and the short side surfaces, the inspection part 1600 may inspect the edge portion E2 of one side surface of the inspection target object MT by rotating the vertically-arranged inspection target object MT clockwise and counterclockwise by a predetermined angle θ by the flipper 1200. In this regard, the angles at which the inspection target object MT is rotated clockwise and counterclockwise in the vertical state may be equal to each other. Alternatively, the angles at which the inspection target object MT is rotated clockwise and counterclockwise in the vertical state may differ from each other.

Although the contents of the present disclosure has been described by the examples described in some embodiments and illustrated in the accompanying drawings, it should be noted that various substitutions, modifications, and changes can be made without departing from the scope of the present disclosure which can be understood by those skilled in the art to which the present disclosure pertains. In addition, it should be noted that such substitutions, modifications and changes are intended to fall within the scope of the appended claims.

## Claims

1. An inspection apparatus, comprising:
a support configured to hold an inspection target object such that a side surface of the inspection target object faces a predetermined direction;
a light source configured to irradiate light toward the inspection target object;
a diffusion reflector configured to diffusely reflect at least part of the light and irradiate the at least part of the light to the side surface of the inspection target object; and
at least one inspection part configured to inspect the inspection target object by receiving the at least part of the light reflected from the diffusion reflector and light reflected from the inspection target object.

2. The apparatus of Claim 1, wherein the diffusion reflector is provided below the support.

3. The apparatus of Claim 1, wherein the diffusion reflector is made of a material having a preset diffusion reflectance.

4. The apparatus of Claim 1, wherein the diffusion reflector has a size or a shape that enables the diffusion reflector to diffusely reflect the at least part of the light irradiated from the light source and irradiate the at least part of the light to the side surface of the inspection target object inclined at a predetermined angle by the support.

5. The apparatus of Claim 4, wherein the diffusion reflector has at least one shape selected from the group of a flat shape, a curved surface shape and a bent shape.

6. The apparatus of Claim 1, wherein the support includes a flipper configured to rotate the inspection target object.

7. The apparatus of Claim 1, wherein the light irradiated from the light source includes pattern light.
